# EUROPEAN PATENT SPECIFICATION

(11) **EP 2 071 745 B1**
(45) Date of publication and mention of the grant of the patent: **16.02.2011**
(21) Application number: 07123263.1
(22) Date of filing: 14.12.2007
(51) Int. Cl.: H04B 7/04

(54) **Beam steering algorithm for NLOS wireless systems with predefined parameters**
Strahlensteueralgorithmus für NLOS-Drahtlossysteme mit vordefinierten Parametern
Algorithme d'orientation de faisceau pour systèmes sans fil NLOS avec paramètres prédéfinis

(43) Date of publication of application: 17.06.2009
(73) Proprietor: Sony Corporation, Tokyo 108-0075 (JP)
(72) Inventor: Wang, Zhaocheng, 70327, Stuttgart (DE); Uno, Masahiro, 70327, Stuttgart (DE)
(74) Representative: Keck, Stephan

(56) References cited:
- EP-A- 1 659 813
- WO-A-01/39320
- US-B1- 6 381 462

## Description

### Field of the invention

The present invention relates to the fields of link adaption, multi-path communication and non-line of sight wireless communication. The present invention especially relates to a communication system, a communication device and a communication method.

### Description of the prior art

In adaptive communication systems that switch between a plurality of communication paths, the access delay is increased and/or the data rate is reduced due to the time required for performing adaption (e.g. automatic gain control) of the communication link when the system switches between the communication paths. US-B2-6381462 discloses a radio local loap system employing channel selection based an received signal quality. From EP 1 659 813 A1 a wireless communication system employing a steerable narrow beam antenna in a first and in a second communication device, in order to provide a wireless communication link between the two communication devices is known. Hereby, each combination of an antenna direction of the first communication device and the second communication device corresponds to a possible communication path between the communication devices. A path scanning is performed to determine a list of the communication paths which are best to support a communication link and a communication link is provided on the communication path which is determined to be best. The list is updated during the provision of the wireless communication link between the devices.

The problem to be solved by the present invention is therefore to reduce the time which is necessary for the adaption to a specific communication path in a communication system. This problem is solved by the communication system according to claim 1, the communication device according to claim 13 and the communication method according to claim 18 of the present invention. Further objects and problems addressed and solved by the present invention will get apparent by the following description of the invention.

### Brief description of the invention

The communication system according to the present invention comprises: A first communication device and a second communication device, whereby said first and second communication device are adapted to transmit a signal on a number of communication paths between said first and second communication device, and a link parameter determination system for determining at least one link parameter for operating a communication link for each of said number of communication paths based on a signal transmitted on the respective communication path and for storing the determined link parameters. Hereby, said first communication device and said second communication device, when switching to a communication path in order to operate a communication link, are adapted to operate a communication link on said communication path using at least one stored link parameter of said communication path.

Due to the use of predetermined link parameters for operating the communication link, determination of link parameters can be omitted when it is switched to the communication path in order to operate the communication link. Determination of link parameters for a specific communication path, however, requires transmitting a signal on the communication path and calculating the link parameters based on the received signal, which wastes valuable transmission time. Therefore, actual data transmission on the communication link is obtained earlier, the access delay of the communication link is reduced and the data rate of the communication link is increased.

Advantageously, said link parameter determination system is adapted to update said stored link parameters based on a signal transmitted on the respective communication path.

Because the link parameters are updated, continuous adaption to channel conditions is achieved. Thus, reliable and high data rate data transmission is enabled even for unsteady channel conditions, as are frequently encountered, for example, by wireless channels.

Advantageously, the communication between said first and said second communication device is based on time frames, each time frame comprising a first period and a second period. Hereby, said link parameter determination system is adapted to determine said at least one link parameter for at least one of said number of communication paths during the first period of a frame and said first communication device and said second communication device are adapted to operate said communication link during the second period of a frame.

Because operation of the communication link is performed during a frame, shorter frame lengths and low frame error rates (relating to the communication link) can be achieved while keeping the overhead due to link adaption low and, therefore, the data rate high.

The communication system advantageously comprises a communication path selection system adapted to select said communication path on which said communication link is operated, whereby selection of the communication path is based on one or more of said signals transmitted on said number of communication paths.

Because the same signals are used for selecting the communication path on which the communication link is provided as are used for determining the link parameters, there is no need to send additional signals and, consequently, a reduction of the data rate is prevented.

It is advantageous when said link parameter determination system is comprised in said first communication device and/or said second communication device.

Advantageously, said first communication device and/or said second communication device comprise a narrow beam antenna which is adapted to be steered to different positions corresponding to different communication paths, whereby said link parameter determination system is adapted to store said determined link parameters together with the position of the narrow beam antenna corresponding to the respective communication path.

Advantageously, said at least one link parameter comprises an AGC value, the length of a guard interval, an indicator of a frequency range, an indicator of a coding scheme, an indicator of a modulation scheme, information indicating if frequency domain equalization shall be employed or not, and/or information if a single or a multicarrier system, e.g. OFDM, shall be employed in the communication system.

The communication device according to the present invention is adapted to receive a signal via a number of communication paths from a further communication device and comprises a link parameter determination system for determining at least one link parameter for operating a communication link for each of said number of communication paths based on a signal received via the respective communication path and for staying the determined link parameters. The communication device, when switching to a communication path in order to operate a communication link with the further communication device, is adapted to operate a communication link with the further communication device on said communication path using at least one stored link parameter of said communication path.

Advantageously, the link parameter determination system is adapted to update said stored link parameters based on a signal transmitted on the respective communication path.

Advantageously, the communication between said communication device and said further communication device is based on time frames, whereby each time frame comprises a first period and a second period. Hereby, said link parameter determination system is adapted to determine said at least one link parameter for at least one of said number of communication paths during the first period of a frame and said communication device is adapted to operate said communication link during the second period of a frame.

The communication device advantageously comprises a communication path selection system adapted to select said communication path on which said communication link is operated based on one or more of said signals transmitted on said number of communication paths.

The communication device advantageously comprises a narrow beam antenna which is adapted to be steered to different positions corresponding to different communication paths. Hereby, said link parameter determination system is adapted to store said determined link parameters together with the position of the narrow beam antenna corresponding to the respective communication path.

The method of communication between a first communication device and a second communication device based on a plurality of communication paths according to the present invention comprises a step of transmitting a signal on a number of communication paths, a step of determining and storing at least one link parameter for operating a communication link for each one of said number of communication paths based on a signal transmitted on the respective communication path and, when switching to a communication path in order to operate a communication link, a step of operating a communication link on said communication path using at least one stored link parameter of said communication path.

Advantageously, said stored link parameters are updated based on a signal transmitted on the respective communication path.

The communication between said first communication device and said second communication device advantageously is based on time frames, whereby each time frame comprises a first period and a second period. In this case, said at least one link parameter of at least one of said number of communication paths is determined during the first period of a frame and said communication link is operated during the second period of a frame.

The method advantageously comprises a step of selecting said communication path on which said communication link is operated based on one or more of said signals transmitted on said number of communication paths.

Advantageously, said first communication device and/or said second communication device comprise a narrow beam antenna which is adapted to be steered to different positions corresponding to different communication paths and wherein said determined link parameters are stored together with the position of the narrow beam antenna corresponding to the respective communication path.

### Brief description of the drawings

Fig. 1 shows an embodiment of the communication system of the present invention in a typical scenario of use.
Fig. 2 shows a frame structure according to the embodiment.
Fig. 3 shows a representation of the path scanning.
Fig. 4 shows schematic representation of the first and the second communication device of the embodiment of the communication system.
Fig. 5 shows a schematic representation of a special embodiment of the communication device according to the present invention.
Fig. 6 shows an example of a candidate path table comprising link parameters.
Fig. 7 shows a flow diagram of an embodiment of the communication method according to the present invention.
Fig. 8 shows a flow diagram of a modified embodiment of the communication method according to the present invention.

### Description of the preferred embodiments

The general idea of the present invention, which is to reduce the access delay and increase the data rate by means of using prestored link parameters for operating (establishing and sustaining) a communication link in a communication system that switches between a plurality of communication paths, is now explained with reference to a specific embodiment. Emphasis is placed on the reduction of an overhead due to an AGC converge time.

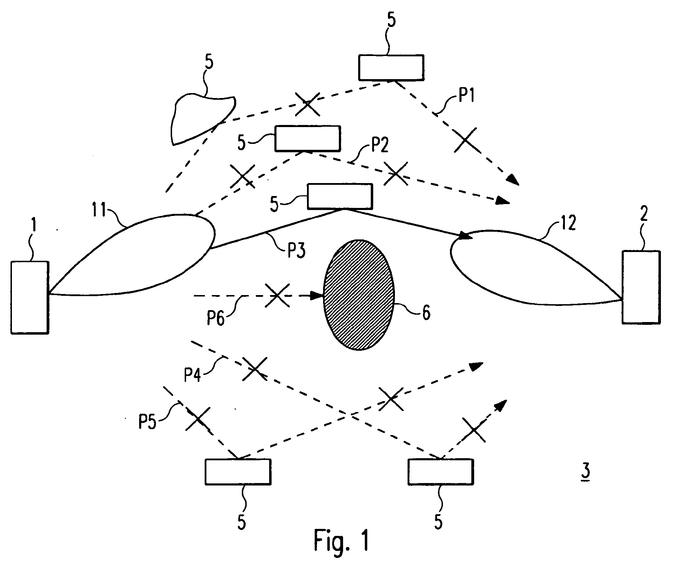

Fig. 1 shows the embodiment of the communication system 3 of the present invention in a typical scenario of use. The communication system 3 comprises a master station (MS) 1 and a subscriber station (SS) 2.

The MS 1 is master in that it sends a beacon message in every time frame and prepares for receiving messages from other stations (notably the SS 2) during a contention period, which is explained below and which distinguishes it over any other station (notably the SS 2) in the communication system 3. The SS 2 is subscriber in that it receives the beacon messages, as is explained below. Therefore, the names chosen (i.e. master station and subscriber station) must not be seen as limiting and the MS 1 might also be called first communication device 1 and the SS 2 might also be called second communication device 2 without changing the subject-matter of the embodiment and without changing the subject-matter of the present invention in general.

While, generally, the communication system 3 may be any type of communication system, the communication system 3 of the embodiment is a wireless communication system. The communication system 3 may, for example, but not exclusively, be an indoor communication system formed of consumer electronic devices, such as a DVD player 1 and a beamer 2 or a portable music player 2 and a music amplifier 1. Other examples are a display 1 and a camcorder 2 or a communication adapter 1 connectable to or comprised in a personal computer and a mobile phone 2. The present invention, however, is not limited to consumer electronic devices. Although for each of the given example devices a role is given (i.e. either MS 1 or SS 2), this role is only example and the device may take also the other role. In an indoor environment, a number of transmission signal reflectors typically is high which corresponds to favorable conditions for deployment of the present invention. However, signal reflections in outdoor environment are known too and the present invention can be equally employed in such environment. Also, the present invention may be used to transmit any type of data. The MS 1 comprises an antenna 11 and the SS 2 comprises an antenna 12. If not stated otherwise in the following, each of the antennas 11, 12 is assumed to be a steerable narrow beam antenna. Any antenna that provides a plurality of (selectable) possible directions of emission and reception can be employed. A narrow beam antenna has a main lobe with a relatively small beamwidth. The direction of the main lobe is the direction of emission and reception of the antenna. The steerable narrow beam antenna (steerable directional antenna) is steerable in the sense that the direction of the main lobe is controllable. It is possible to have a steerable antenna only on one side. That is, while the antenna 11 of the MS 2 may be a non-steerable wide beam/omnidirectional antenna, the antenna 12 of the SS 1 may be a steerable directional antenna and vice versa.

Although, the antennas 11, 12 may e.g. operate in the millimeter wavelength/frequency range at about 60GHz, other frequencies of operation are possible. Each combination of a direction of emission and reception (in the following called beam direction, antenna direction, or antenna position) of the antenna 11 of the MS 1 and of a direction of emission and reception (in the following called beam direction, antenna direction, or antenna position) of the antenna 12 of the SS 2 corresponds to one possible communication path. The communication paths are alternative, that is, only one communication path can be employed at a time. The communication paths are spatially different. Due to reflection of the transmitted signals at objects 5, there may be non line-of-sight communication paths P1, P2, P3, P4, P5. Some paths, such as the line-of-sight communication path P6, may be blocked due to an obstacle 6. While in Fig. 1 a situation is depicted, where the MS 1 transmits and the SS 2 receives, this is only an example and both MS 1 and SS 2 may operate as a receiver (Rx) and as a transmitter (Tx). Both directional antennas 11, 12 are steered to an optimum position (corresponding to an optimum communication path) where, for example, the strongest signal (P3 in Fig. 1) can be received. As a result, only a small number of reflection signals do reach the receiver.

In a classical system, comprising wide beam/omnidirectional antennas at the Tx side and the Rx side, reflection signals would reach the receiver via all paths P1, P2, P3, P4, P5, causing, when the data rate is high, a channel delay spread which is over tens of symbol periods leading to severe inter-symbol interference (ISI) due to deep frequency selective fading. ISI must be combated (e.g. by elaborate equalizing or OFDM modulation techniques), which is adding to the complexity of the transceiver circuitry. Thus, when compared to a classical system comprising wide beam/omnidirectional antennas at the Tx side and the Rx side, the channel delay spread can be shortened dramatically, the complexity of the (baseband) circuit can be reduced and a low power consumption can be achieved by using at least one narrow beam antenna. In addition, due to the higher antenna gain from both Tx and Rx narrow beam antennas 11, 12, the link budget requirements for high rate wireless communication (e.g. beyond 1 Gbps) is easier fulfilled.

In the embodiment, each antenna 11, 12 is assumed to have a scanning range of 100° with a half power beam width of 20° in both of two orthogonal directions termed "horizontal" and "vertical" providing a two-dimensional scanning field, other values and specifications being possible, however. In this case, the number of antenna directions of each of MS 1 and SS 2 is 5x5=25 and the total number of (a priori possible) communication paths between the MS 1 and the SS 2 is 25x25=625. Therefore, the calculation complexity for determining the optimum communication path is high. One reduced complexity algorithm that might be employed is described in EP 1659813 A1.

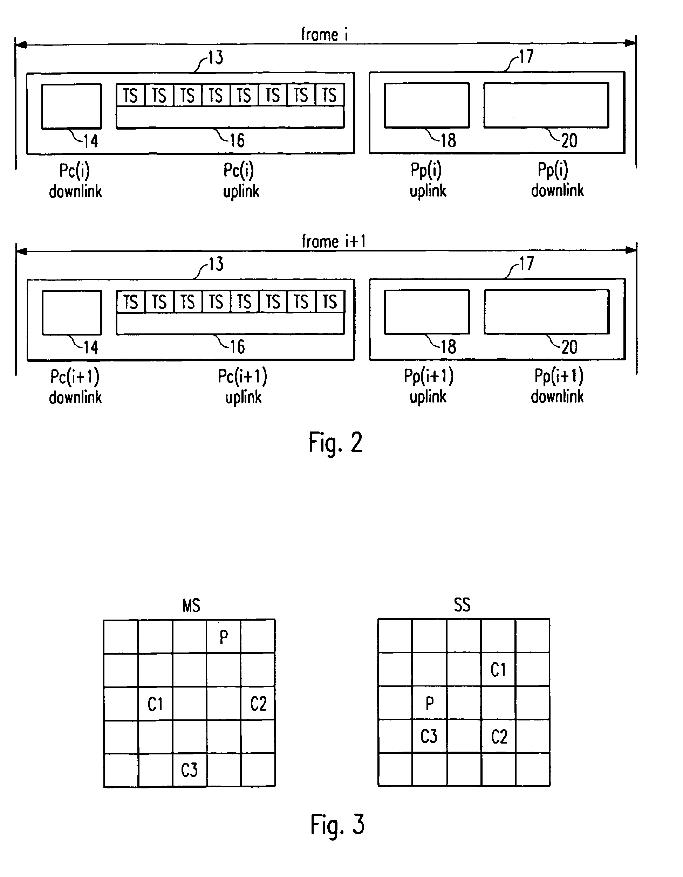

Fig. 2 shows a frame structure according to the embodiment (time is increasing from left to right). Each time frame comprises a scanning period 13 comprising a beacon period 14 and a contention period 16 and a data period 17 comprising an uplink data period 18 and a downlink data period 20. The beacon period 14 and the downlink data period 20 are downlink (transmission from MS 1 to SS 2) and the contention period 16 and the uplink data period 18 are uplink (transmission from SS 2 to MS 1). In order to determine the best (e.g. strongest) communication paths based on which a communication link can be provided, a path scanning is performed during the frames' path scanning periods 13 in order to determine the best communication path. The communication link (i.e. the actual communication facility for transmitting user data provided by the MS 1 and MS 2) is provided during the frames' data periods 17. The collectivity of data periods 17 form a data phase 17 (both, period and phase, are referred to by the same reference numeral) and the collectivity of scanning periods 13 form a scanning phase 13 (both, period and phase, are referred to by the same reference numeral). The data phase 17 is used to transport user data. The data phase 17 may transport other data, including internal protocol data.

Shown are two successive frames i and i+1. During the scanning period 13 of the frame i (i=1,2,3,...), the communication path Pc(i) is used. During the data period 17 of the frame i the communication path Pp(i) is used, which is termed 'present communication path'. To each communication path corresponds a pair of antenna directions, one antenna direction for the MS 1, one antenna direction for the SS 2. Most of the time, Pc(i+1) is different from Pc(i) and Pp(i+1) is the same as Pp(i). Thus, under normal conditions, Pc changes more often than Pp.

For every frame i, the communication system 3 determines a present communication path Pp(i), which is the communication path on which the communication link is provided during the frame's data period 17. Determination of the present communication path is based on signals transmitted during the scanning phase 13. As part of the path scanning, the communication system 3 repeatedly transmits a signal on each one of a given number of the communication paths and determines a channel quality index for each one of the given number of communication paths based on the transmitted signal. The given number of communication paths may vary with time. The given number of communication paths may comprise all a priori possible communication paths (i.e. all antenna direction combinations) or only a subset thereof. At the beginning of the communication, it may be advantageous to scan all a priori possible communication paths. At a later stage, some paths may be deprecated (e.g. because they have constantly not been able to provide for communication) and path scanning may be restricted to "more promising" communication paths. From time to time, even the deprecated communication paths may be scanned. In this case, all a priori possible communication paths are scanned repeatedly, albeit at a different frequency. The channel quality index is determined by a channel estimation system 21 which is comprised in the MS 1 and the MS2 (i.e. is comprised in the system formed by the MS 1 and the MS 2). In the embodiment, the channel estimation system 21 comprises a channel estimator 21-2 comprised in the SS 2 and, optionally, a channel estimator 21-1 comprised in the MS 1. The channel quality index may be based on, given by or correspond to a received signal strength indicator (RSSI). Additionally, or alternatively, the channel quality index may be based on a bit error rate (BER) and/or a frame error rate (FER).

Additionally, the channel estimation system 21 may be adapted to determine the strength of multipath fading/ISI for each communication path based on the signals transmitted during the scanning phase 13 as part of the path scanning (i.e. determines a corresponding ISI strength value for each communication path).

More specifically, in this embodiment, the MS 1 sends a beacon signal using the MS antenna direction of a given scanning period 13 during the beacon period 14 of the given scanning period 13. The SS 2 tries to receive the beacon using the SS antenna direction of the given scanning period 13 and determines, by means of the SS channel estimator 21-2 , the channel quality index of the communication path. In this way, the communication paths are tested in one direction (from MS 1 to SS 2), but it may be assumed, that channel quality is the same for both directions. Additionally, the channel quality indices (and ISI strength values) may be obtained based on signals transmitted from the SS 2 to the MS 1 during the path scanning phase 13 (e.g. during the contention periods 16). Hereby, the channel estimation system 21 determines the channel quality index (and the ISI strength value) by means of the SS channel estimator 21-2 and the MS channel estimator 21-1 based on the signals transmitted in the scanning phase 13 from the MS1 to the SS2 and from the SS2 to the MS 1, respectively. Additionally, second channel quality indices (and second ISI strength values) may be obtained based on signals transmitted from the SS 2 to the MS 1 during the path scanning phase 13 (e.g. during the contention periods 16). Hereby, the channel estimation system 21 determines the second channel quality index (and the second ISI strength value) by means of the MS channel estimator 21-1 based on the signals transmitted in the scanning phase 13 from the SS2 to the MS 1. One or more link parameters of a communication link on a communication path in the direction from the SS 2 to the MS 1 may be based on the second channel quality value (and the second ISI strength value) of the communication path.

Fig. 3 shows a representation of the path scanning. The left grid shows the antenna directions of the MS 1 (each square corresponding to one antenna direction, each column corresponding to a "horizontal" position, each row corresponding to a "vertical" position), the right grid shows the antenna directions of the SS2. Based on the signals transmitted as part of the path scanning, not only a present path is determined but also an ordered list of candidate paths (whereby the present path may be seen as a special, first one of the candidate paths). Determination of the present communication path and the other candidate communication paths is based on the channel quality index (e.g. RSSI) determined for the communication paths. It must be understood, however, that there might be other criteria (e.g. link parameters and channel history) than channel quality on which the determination of the list of candidate paths is based. Determination of the list of candidate paths is performed by a communication path selection system 22. The communication path selection system 22 is comprised in the MS 1 and in the SS 2 (i.e. is comprised in the system formed by the MS 1 and the SS 2). The communication path selection system 22 may be comprised entirely in the SS 2 or entirely in the MS 1 or may comprise a first subunit 22-2 comprised in the SS 2 and a second subunit 22-1 comprised in the MS 1. P indicates the antenna directions of the MS 1 and the SS 2 corresponding to the present path, which may be also called candidate path 0. C1 indicates the antenna directions of the MS 1 and the SS 2 for the candidate path 1. C2 indicates the antenna directions of the MS 1 and the SS 2 for the candidate path 2. C3 indicates the antenna directions of the MS 1 and the SS 2 for the candidate path 3. In this example, only 4 communication paths are determined to be good enough to support a communication link. When the present path is disturbed (e.g. by a moving object), one of the candidate paths (e.g. the next one) is taken to replace the present path. A possible implementation of this is described in EP 1 659 813 A1.

The scanning phase 13 is used to measure the channel quality of a given number of communication paths (e.g. all communication paths) and to update the candidate path table shown in Fig. 3 continuously and dynamically. Antenna control information may be exchanged between the MS 1 and the SS 2 during the scanning phase 13. As is shown in Fig. 2, the contention period 16 may comprise time slots TS for facilitating, for example, a contention based media access. Contention based media access may be provided by other means than time slots. Even if time slots TS are provided, this does not necessarily mean that the communication system 3 generally is a Time Division Multiple Access (TDMA) system. In fact, the communication system 3 of the embodiment may provide multiple access by time division and by other means than time division.

Generally, the system formed by the MS 1 and the SS 2 further comprise a link parameter determination system 24 for determining at least one link parameter for each of the given number of communication paths. In the embodiment, the link parameter determination system 24 comprises a link parameter determinator 24-2 comprised in the SS 2 and, optionally, a link parameter determinator 24-1 comprised in the MS 1. A link parameter is a parameter that describes the scheme used for information exchange between the MS 1 and the SS 2 and/or a parameter that is chosen according to channel conditions. The determined link parameters are stored in a (possibly distributed) database (not shown) in association with the corresponding communication paths. Based on the stored link parameters, the communication link is provided in the data phase 17. The link parameters are determined based on the signals received in the scanning phase 13. Some link parameters may be determined based on the determined channel quality index and/or the determined ISI strength value. When a communication path is determined not to be suitable to support a communication link (e.g. because the determined RSSI is very low), the at least one link parameter for that communication link may take on a special value or be a special "link parameter" indicating that the communication link is determined/considered not to be able to support a communication link. The present embodiment is adapted to determine the following link parameters for each communication path:
- AGC value of MS 1, AGC value of SS 2 (An AGC value corresponds to the gain that is applied to the received signals in order to achieve a standard signal level. AGC (Automatic Gain Control), for example, might be performed in an analog RF circuit before an ADC (analog to digital conversion) block which assumes constant signal power output from the RF circuit),
- type of communication system (the types being e.g.: a) single carrier system without frequency domain equalizer, b) OFDM system and c) single carrier system with frequency domain equalizer),
- modulation scheme (the schemes being e.g. BPSK, QPSK, DQPSK, 16QAM and 64QAM),
- guard interval length (in case of e.g. OFDM system and single carrier system with frequency domain equalizer),
- frequency range of signal transmission (e.g. 59GHz ISM band (59GHz-60GHz) or 65 GHz ISM band (65GHz-66GHz)),
- coding scheme used for error correction (e.g. different coding schemes of code rates 1/2, 2/3, 4/5, 5/6, 7/8 may be defined).
However, it is generally possible to determine only a subset of the parameters and to determine additional parameters not described here. Some of the link parameters (i.e. the value the link parameter takes) must be known to both communication devices (i.e. the MS 1 and the SS 2) or must be known to the communication device (the MS 1 or the MS 2) which has not determined it. Means and methods for providing the information to both communication devices 1, 2 or for assuring that both communication devices 1, 2 are using the same link parameter value are assumed to be available. Most straight forward, for example, such may be achieved by transmitting the link parameter (value) from the communication device (SS 2 or MS 1) which has determined it to the communication device (MS 1 or SS 2, respectively) which is requiring it. The link parameter (value) may be transmitted during the scanning phase 13 and/or the data phase 17.

The AGC value of the SS 2 (SS AGC value) may be determined by an analog AGC circuit 26 comprised in the link parameter determinator 24-2 of the SS 2. The SS AGC circuit 26 basically is conventional, but must provide for a possibility of reading out of the determined AGC value and for a possibility of applying a previously determined and stored AGC value to a received signal. The AGC value of the MS 1 (MS AGC value) may for example be determined based on the SS AGC value or based on the determined channel quality index (e.g. RSSI). Alternatively, the MS AGC value may be determined by a conventional analog AGC circuit 28 comprised in the MS 1 and in the link parameter determination system 24. In the latter case, the communication system 3 repeatedly transmits a signal on each one of a number of the communication paths from the SS 2 to the MS 1 during the scanning phase 13 (e.g. during the contention periods 16 or another period of the scanning phase 13). The AGC circuit 28 of the MS 1 determines the MS AGC value for each communication path based on the signal transmitted from the SS 2 to the MS 1 on the communication path. When a new signal arrives at the MS 1 via the communication path, the MS AGC value is updated correspondingly. The MS AGC circuit 28 basically is conventional, but must provide for a possibility of reading out of the determined AGC value and for a possibility of applying a previously determined and stored AGC value to a received signal. Thus, determination of the MS AGC values is basically the same as the determination of the SS AGC values. However, assuming for example, that the SS 2 transmits one of the signals during one time slot TS of the contention period and another SS (not shown) transmits a similar or other signal during the same time slot TS, the signals collide and determination of the MS AGC value is not successful. Thus, the actual update frequency of the MS AGC value is probabilistic. Alternatively, the MS 1 might assign an exclusive transmission possibility during the path scanning period (e.g. a specific transmission slot TS) to the SS2, in order to avoid collision. However, the presence of a second SS is only an example and not a necessity. In case there is no further SS, there is no need for a contention period 16 and the contention period 16 might be replaced by an alternative uplink period for exclusive use of the SS 2. During each alternative uplink period, the SS 2 transmits the required signal to the MS 1 using the communication path Pc of the corresponding scanning period 13 and the corresponding MS AGC value is obtained by the AGC circuit 28 based on the transmitted signal. The communication system 3 might change dynamically (e.g. upon user request, predetermined schedule or automatic detection of further communication devices) between a single SS mode and a multiple SS mode.

When a link parameter is determined based on a signal transmitted in a given direction of the communication path (from MS 1 to SS 2 or from SS 2 to MS1), the link parameter is normally used for operating a communication link on the communication path in the same direction. For example, when the above mentioned parameters SS AGC value, type of communication system, modulation scheme, guard interval length, frequency range and coding scheme are determined by the link parameter determinator 24-2 of the SS 2 based on a signal transmitted from the MS 1 to the SS 2 on a given communication path, these link parameters are (at least) used for operating a communication link on the communication path from the MS 1 to the SS 2. For example, when the above mentioned parameters MS AGC value, type of communication system, modulation scheme, guard interval length, frequency range and coding scheme are determined by the link parameter determinator 24-1 of the MS 1 based on a signal transmitted from the SS 2 to the MS 1 on a given communication path, these link parameters are (at least) used for operating a communication link on the communication path from the SS 2 to the MS 1. However, the link parameter may also be used for operating the communication link in the opposite direction.

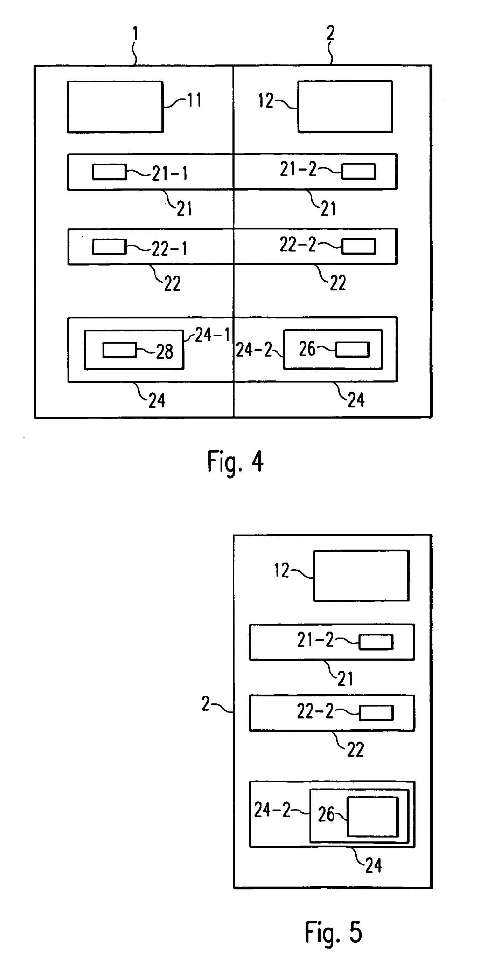

Fig. 4 shows a schematic representation of the MS 1 and the SS 2 as described above. In a special embodiment of the SS 2, corresponding to a special embodiment of the communication system 3, the channel estimation system 21, the communication path selection system 22 and the link parameter determination system 24 are comprised in the SS 2. In this case and in case the MS AGC value is determined by the AGC circuit 28, the AGC circuit 28 is part of the MS 1 but, in contrast to the above, not part of the link determination system 24. Besides this, the special embodiment is the same as the embodiment described above. Fig. 5 shows a representation of the special embodiment of the SS 2.

Based on the above, the following example adaption scheme, in terms of link parameters determined by the link parameter determination system 24 is realized:
If, for a given communication path, there is no multi-path fading (e.g. ISI strength value below a given first threshold) and the determined channel quality is very good (e.g. channel quality index above a given second threshold), the single carrier system without frequency domain equalizer and a high level modulation scheme having a first constellation size (e.g. 64 QAM) are selected and stored for the given communication path. This enables a high data rate and a simple transmitter and, especially, receiver operation (no frequency domain equalization at the receiver) so that low power consumption is achieved.
If, for a given communication path, there is strong multi-path fading (e.g. ISI strength value above the first threshold) and the determined channel quality is very good (e.g. channel quality index above the second threshold), the OFDM or the single carrier system with frequency domain equalizer and a high level modulation scheme having a second constellation size (e.g. 16QAM) are selected and stored for the given communication path. This enables a high data rate.
If, for a given communication path, there is strong multi-path fading (e.g. ISI strength value above the first threshold), and the determined channel quality is good enough (e.g. channel quality index above a third threshold) for becoming a candidate path but not strong enough for supporting a high level modulation scheme (e.g. channel quality index below the second threshold), the OFDM or the single carrier system with frequency domain equalizer and a low level modulation scheme having a third constellation size smaller than the second constellation size and/or the first constellation size (e.g. QPSK) are selected and stored for the given communication path. This enables reliable communication.

Thus, the single carrier system without frequency domain equalizer is used for communication paths with relatively low multi-path fading and the single carrier system with frequency domain equalizer or the OFDM system is used for communication paths with relatively high multi-path fading. Moreover, a relatively high constellation size modulation scheme is used for communication paths with a relatively high channel quality and a relatively low constellation size modulation scheme is used for communication paths with a relatively low channel quality. As explained above, channel quality may, for example, be based on, given by or correspond to the received signal strength.

As the link parameters are applied to each communication path individually and according to the actual channel conditions (as determined in the scanning phase 13), an optimal trade off between power consumption and date rate can be achieved.

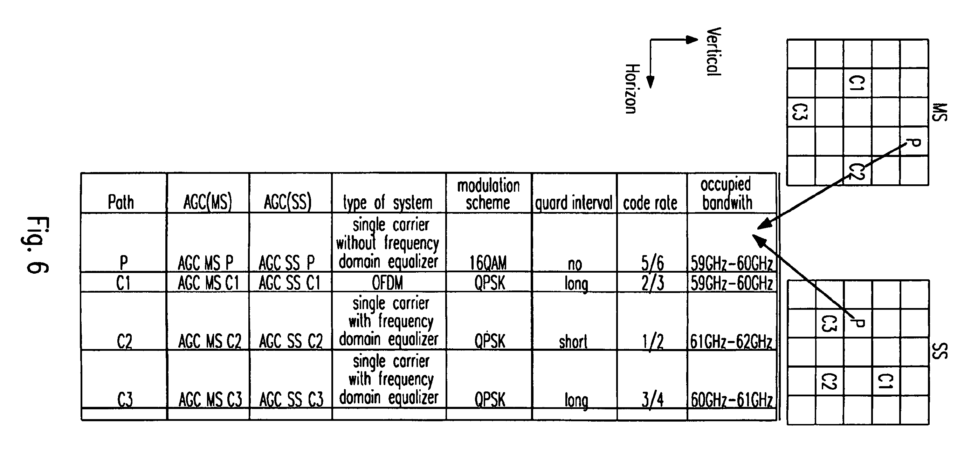

Fig. 6 shows an example of a candidate path table comprising link parameters built up according to the above adaption scheme. The table shows (from left to right) the link parameters MS AGC value, SS AGC value, type of system, modulation scheme, length of guard interval, coding scheme (the code rate specified is an indicator of the coding scheme) and frequency range for the paths (from top to bottom) P, C1, C2 and C3. The determined link parameters for a communication path are stored together with the positions of the antennas 11, 12 corresponding to the communication path. It is to be noted that the table of Fig. 6 may be stored in a distributed fashion, as, for example, there is no need to have the MS AGC value stored at the SS 1 and the SS AGC value stored at the MS 1. Similarly, it might not be required to store a SS 1 antenna direction at the MS 2 and vice versa.

Because of the utilization of the pre-stored link parameters, determination of the link parameters at the time (or the beginning) of the actual operation of the communication link (i.e. during data phase 17) can be omitted, saving valuable transmission time and, thus, augmenting the data rate. For example, assuming a communication system transmitting a calibration signal at the beginning of the uplink data period 18 in order to determine an AGC value of the MS 1 for operating the communication link in the uplink data period 18 and transmitting a calibration signal at the beginning of the downlink data period 20 in order to determine an AGC value of the SS 1 for operating the communication link in the downlink data period 20. The calibration signals carry no data (at least not at a high data rate) and, therefore, transmission of these signals reduces the data rate. The length of transmission of the calibration signals must be as long as the AGC circuit of the MS 1 or the SS 2 needs to converge to the optimum AGC value. This time is called the AGC converge time. The ratio of AGC converge time over frame length is named AGC converge time overhead. Therefore, when compared to such a system, the present invention reduces the AGC converge time overhead. When reducing the frame length, the AGC converge time remains constant and the AGC converge time overhead consequently becomes high. Therefore, AGC converge time is especially of an issue, when the frame length is short. However, *inter alia* in order to achieve a low frame error rate, a short frame length is desirable in high data rate systems (e.g. beyond 1 Gbps). Consequently, the present invention is especially usefully applied to such systems. Also, the present invention is particularly useful in conditions where a frequent change of the communication paths is necessary. The embodiment is a Time Division Duplex (TDD) type communication system 3. The present invention may, however, advantageously be employed also with communication systems of another duplex type and even with non-duplex communication systems.

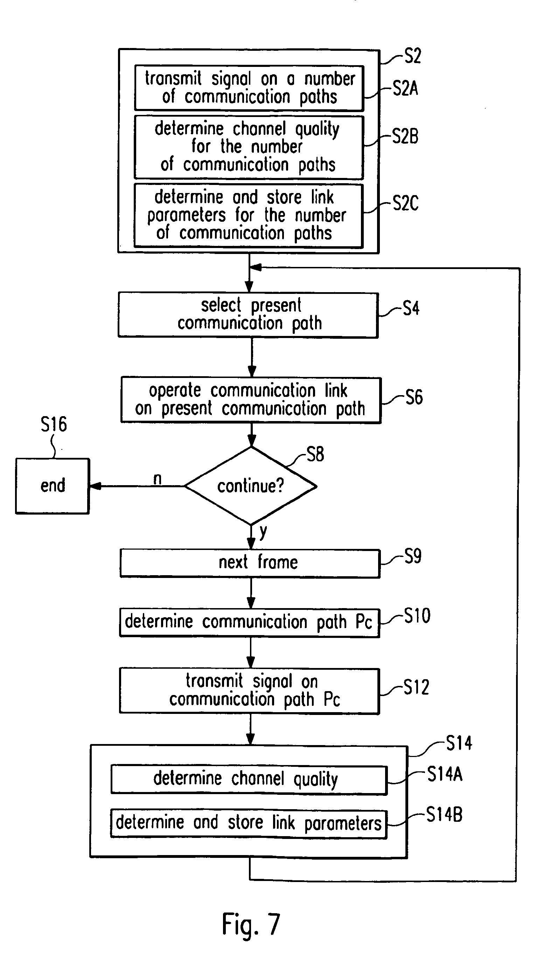

Fig. 7 shows a flow diagram of the steps of an inventive communication method performed by the communication system 3.

A step S2 comprises substeps S2A, S2B, S2C. In step S2A, the communication system 3 transmits a signal on each one of a number of communication paths. In step S2B, the communication system 3 determines the channel quality for each one of the number of communication paths based on the signal transmitted on the communication path. In step S2C, the communication system 3 determines at least one link parameter for each one of the number of communication paths based on the signal transmitted on the communication path and stores the determined at least one link parameter. The number of communication paths may comprise all possible communication paths or only a subset thereof as indicated above. The step (S2B) of determining the channel quality comprises determining the channel quality index and the ISI strength value for the selected communication path. After step S2, the method proceeds to a step S4.

In the step S4, the present communication path Pp is selected based on signals that are transmitted on each one of the number of communication paths during the step S2 and/or during the step S12. The method proceeds to a step S6.

In the step S6, the communication system switches to the present communication path Pp and operates the communication link on the present communication path Pp during the data period 17 of the current frame. The method proceeds to a step S8.

In the step S8, it is determined if the communication method continues. If no, the method proceeds to step S 16 and finishes. If yes, the method proceeds to a step S9.

In the step S9, the next frame (i.e. the next frame in time) becomes the current frame and the method proceeds to a step S10.

In the step S10, the communication path Pc is determined. As this step is part of a loop comprising the steps S4 to S 14, it is repeated until the method ends. The path Pc is hereby selected in such a way that all communication paths of a number of communication paths get selected. As is indicated above, the number of communication paths may (but need not) vary with time and may comprise all possible communication paths or only a subset thereof. In effect, the frequency of selection may be the same or different for different paths. For example, all communication paths may be selected cyclically. The method proceeds to a step S 12.

In the step S12, a signal (i.e. beacon) is transmitted on the selected communication path Pc during the scanning period 13 of the current frame. The method proceeds to a step S 14.

The step S 14 comprises substeps S 14A and S 14B. In step S 14A, the channel quality is determined (updated) for the selected communication path Pc based on the signal transmitted on the communication path Pc in the step S12. The step (S 14A) of determining the channel quality comprises determining the channel quality index and the ISI strength value for the selected communication path. In step S 14B, the at least one link parameter is determined (updated) for the selected communication path Pc based on the signal transmitted on the communication path Pc in the step S12 and the determined at least one link parameter is stored. After step S 14, the method returns to step S4.

In the step S16, the method ends.

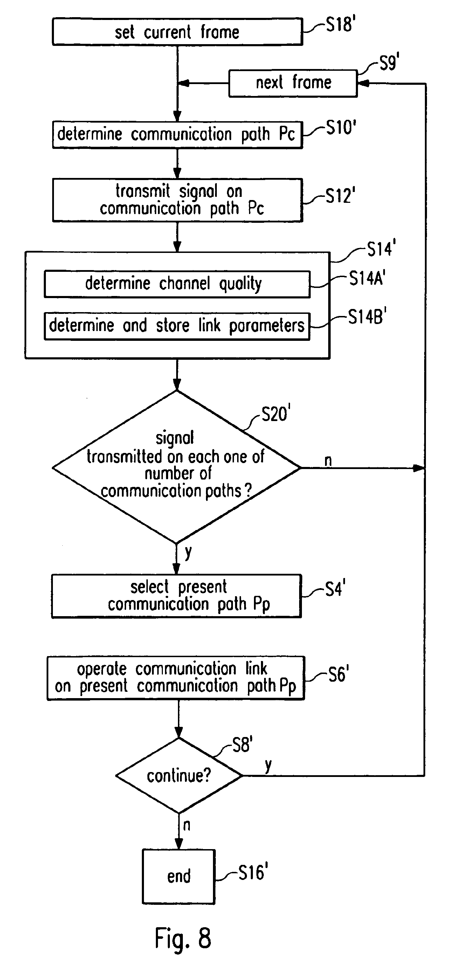

The step S2 may, for example, be realized by looping the step S9, S10, S12 and S 14. The steps S4 and S6 are then executed conditionally, only in case all communication paths of a number of communication paths have already been tested. This is shown in Fig. 8, where the step S2 is omitted, a new initialization step S 18' is added and a new step S20' is inserted in between steps S14' and S4'.

In the initialization step S18', a current frame is set. The method proceeds to step 10'.

In the step S10', the communication path Pc is determined. As this step is part of a loop comprising the steps S10', S12', S 14' and S9', it is repeated until the method ends. The path Pc is hereby selected in such a way that all communication paths of a number of communication paths get selected. As is indicated above, the number of communication paths may (but need not) vary with time and may comprise all possible communication paths or only a subset thereof. In effect, the frequency of selection may be the same or different for different paths. For example, all communication paths may be selected cyclically. The method proceeds to a step S12'.

In the step S12', a signal (i.e. beacon) is transmitted on the selected communication path Pc during the scanning period 13 of the current frame. The method proceeds to a step S14'.

The step S 14' comprises substeps S14A' and S 14B'. In step S 14A', the channel quality is determined (updated) for the selected communication path Pc based on the signal transmitted on the communication path Pc in the step S12'. The step (S14A') of determining the channel quality comprises determining the channel quality index and the ISI strength value for the selected communication path. In step S 14B', the at least one link parameter is determined (updated) for the selected communication path Pc based on the signal transmitted on the communication path Pc in the step S12' and the determined at least one link parameter is stored. After step S 14', the method proceeds to a step S20'.

In step S20', it is determined if a signal has already been transmitted on each one of a number of communication paths. If yes, the method proceeds to step S4'. If no, the method proceeds to step S9'.

In the step S4', the present communication path Pp is selected based on signals that are transmitted on the number of communication paths during the step S12'. The method proceeds to a step S6'.

In the step S6', the communication system switches to the present communication path Pp and operates the communication link on the present communication path Pp during the data period 17 of the current frame. The method proceeds to a step S8'.

In the step S8', it is determined if the communication method continues. If no, the method proceeds to a step S16'. If yes, the method proceeds to a step S9'.

In the step S9', the next frame (next frame in time) becomes the current frame and the method proceeds to step S10'.

In step S 16', the method ends.

The present invention has been explained with reference to specific embodiments. This is by way of example only. It is clear to the person skilled in the art that many modifications are obtainable without departing from the basic principles of the invention. The present invention is therefore limited only by the scope of the appended claims and not by the specific details presented by the way of example in the above description.

## Claims

1. A communication system (3) comprising
a first communication device (1) and a second communication device (2), said first and second communication device (1,2) being adapted to transmit a signal on a number of communication paths between said first and second communication device (1, 2) and
a link parameter determination system (24) for determining at least one link parameter for operating a communication link for each of said number of communication paths based on a signal transmitted on the respective communication path and for storing the determined link parameters, whereby
said first communication device (1) and said second communication device (2), when switching to a communication path in order to operate a communication link, are adapted to operate a communication link on said communication path using at least one stored link parameter of said communication path.

2. A communication system (3) according to claim 1 wherein said link parameter determination system (24) is further adapted to update said stored link parameters based on a signal transmitted on the respective communication path.

3. A communication system (3) according to claim 1 or 2 wherein
the communication between said first (1) and said second (2) communication device is based on time frames, each time frame comprising a first period (13) and a second period (17), wherein
said link parameter determination system (24) is further adapted to determine said at least one link parameter for at least one of said number of communication paths during the first period (13) of a frame and wherein
said first communication device (1) and said second communication device (2) are adapted to operate said communication link during the second period (17) of a frame.

4. A communication system (3) according to claim 1, 2 or 3 comprising
a communication path selection system (22) adapted to select said communication path on which said communication link is operated based on one or more of said signals transmitted on said number of communication paths.

5. A communication system (3) according to any one of the claims 1 to 4 wherein
said link parameter determination system (24) is comprised in said first communication device (1) and/or said second communication device (2).

6. A communication system (3) according to any one of the claims 1 to 5 wherein said first communication device (1) and/or said second communication device (2) comprise a narrow beam antenna (11, 12) which is adapted to be steered to different positions corresponding to different communication paths and
said link parameter determination system (24) is adapted to store said determined link parameters together with the position of the narrow beam antenna (11, 12) corresponding to the respective communication path.

7. A communication system (3) according to any one of the claims 1 to 6 wherein said at least one link parameter comprises an AGC value.

8. A communication system (3) according to any one of the claims 1 to 7 wherein said at least one link parameter comprises the length of a guard interval.

9. A communication system (3) according to any one of the claims 1 to 8 wherein said at least one link parameter comprises an indicator of a frequency range.

10. A communication system (3) according to any one of the claims 1 to 9 wherein said at least one link parameter comprises an indicator of a coding scheme.

11. A communication system (3) according to any one of the claims 1 to 10 wherein said at least one link parameter comprises an indicator of a modulation scheme.

12. A communication system (3) according to any one of the claims 1 to 11 wherein said at least one link parameter comprises information indicating if frequency domain equalization shall be employed or not.

13. A communication system according to any one of the claims 1 to 12,
wherein said at least one link parameter comprises information indicating if a single or a multicarrier system shall be employed.

14. A communication device (2) adapted to receive a signal via a number of communication paths from a further communication device (1) comprising
a link parameter determination system (24) for determining at least one link parameter for operating a communication link for each of said number of communication paths based on a signal received via the respective communication path and for storing the determined link parameters,
said communication device (2), when switching to a communication path in order to operate a communication link with the further communication device (1), is adapted to operate a communication link with the further communication device (1) on said communication path using at least one stored link parameter of said communication path.

15. A communication device (2) according to claim 14 wherein said link parameter determination system (24) is further adapted to update said stored link parameters based on a signal transmitted on the respective communication path.

16. A communication device (2) according to claim 14 or 15 wherein
the communication between said communication device (2) and said further communication device (1) is based on time frames, each time frame comprising a first period (13) and a second period (17), wherein
said link parameter determination system (24) is further adapted to determine said at least one link parameter for at least one of said number of communication paths during the first period (13) of a frame and wherein
said communication device (2) is adapted to operate said communication link during the second period (17) of a frame.

17. A communication device (2) according to claim 14, 15 or 16 comprising
a communication path selection system (22) adapted to select said communication path on which said communication link is operated based on one or
more of said signals transmitted on said number of communication paths.

18. A communication device (2) according to any one of the claims 14 to 17 comprising
a narrow beam antenna (12) which is adapted to be steered to different positions corresponding to different communication paths and wherein
said link parameter determination system (24) is adapted to store said determined link parameters together with the position of the narrow beam antenna (12) corresponding to the respective communication path.

19. A method of communication between a first communication device (1) and a second communication device (2) based on a plurality of communication paths comprising the steps of
transmitting (S10, S12, S9) a signal on a number of communication paths, determining and storing (S14B) at least one link parameter for operating a communication link for each one of said number of communication paths based on a signal transmitted on the respective communication path and,
when switching to a communication path in order to operate a communication link, operating (S6) a communication link on said communication path using at least one stored link parameter of said communication path.

20. A method according to claim 19 wherein
said stored link parameters are updated based on a signal transmitted on the respective communication path.

21. A method according to claim 19 or 20 wherein
the communication between said first communication device (1) and said second communication device (2) is based on time frames, each time frame comprising a first period (13) and a second period (17), wherein
said at least one link parameter of at least one of said number of communication paths is determined during the first period (13) of a frame and wherein
said communication link is operated during the second period (17) of a frame.

22. A method according to claim 19, 20 or 21 comprising a step of
selecting (S4) said communication path on which said communication link is operated based on one or more of said signals transmitted on said number of communication paths.

23. A method according to any one of the claims 19 to 22 wherein said first communication device (1) and/or said second communication device (2) comprise a narrow beam antenna (11, 12) which is adapted to be steered to different positions corresponding to different communication paths and wherein
said determined link parameters are stored together with the position of the narrow beam antenna (11, 12) corresponding to the respective communication path.

## Patentansprüche

1. Kommunikationssystem (3) mit
einer ersten Kommunikationseinrichtung (1) und einer zweiten Kommunikationseinrichtung (2), wobei die erste und zweite Kommunikationseinrichtung (1, 2) ausgestaltet sind, ein Signal auf einer Anzahl an Kommunikationspfaden zwischen der ersten und zweiten Kommunikationseinrichtung (1, 2) zu übertragen, und
einem Linkparameter-Bestimmungssystem (24) zum Bestimmen wenigstens eines Linkparameters zum Betreiben eines Kommunikationslinks für jeden der Anzahl an Kommunikationspfaden basierend auf einem auf dem jeweiligen Kommunikationspfad übertragenen Signal und zum Speichern der bestimmten Linkparameter, wobei
die erste Kommunikationseinrichtung (1) und die zweite Kommunikationseinrichtung (2), wenn auf einen Kommunikationspfad zum Betrieb eines Kommunikationslinks umgeschaltet wird, ausgestaltet sind, einen Kommunikationslink auf dem Kommunikationspfad unter Benutzung wenigstens eines gespeicherten Linkparameters des Kommunikationspfades zu betreiben.

2. Kommunikationssystem (3) gemäß Anspruch 1, wobei das Linkparameter-Bestimmungssystem (24) ferner ausgestaltet ist, die gespeicherten Linkparameter basierend auf einem auf dem entsprechenden Kommunikationspfad übertragenen Signal zu aktualisieren.

3. Kommunikationssystem (3) gemäß Anspruch 1 oder 2, wobei
die Kommunikation zwischen der ersten (1) und der zweiten (2) Kommunikationseinrichtung auf Zeitrahmen basiert, wobei jeder Zeitrahmen eine erste Zeitdauer (13) und eine zweite Zeitdauer (17) umfasst, wobei
das Linkparameter-Bestimmungssystem (24) ferner ausgestaltet ist, den wenigstens einen Linkparameter für wenigstens einen der Anzahl an Kommunikationspfaden während der ersten Zeitdauer (13) eines Rahmens zu bestimmen, und wobei
die erste Kommunikationseinrichtung (1) und die zweite Kommunikationseinrichtung (2) ausgestaltet sind, den Kommunikationslink während der zweiten Zeitdauer (17) eines Rahmens zu betreiben.

4. Kommunikationssystem (3) gemäß Anspruch 1, 2 oder 3 mit
einem Kommunikationspfadauswahlsystem (22), das dazu ausgestaltet ist, den Kommunikationspfad, auf dem der Kommunikationslink betrieben wird, basierend auf einem oder mehreren der über die Anzahl an Kommunikationspfaden übertragenen Signale auszuwählen.

5. Kommunikationssystem (3) gemäß einem der Ansprüche 1 bis 4, wobei
das Linkparameter-Bestimmungssystem (24) in der ersten Kommunikationseinrichtung (1) und/oder der zweiten Kommunikationseinrichtung (2) enthalten ist.

6. Kommunikationssystem (3) gemäß einem der Ansprüche 1 bis 5, wobei
die erste Kommunikationseinrichtung (1) und/oder die zweite Kommunikationseinrichtung (2) eine schmalbündelnde Antenne (11, 12) aufweist, die dazu ausgestaltet ist, an verschiedene Positionen entsprechend verschiedenen Kommunikationspfaden gesteuert zu werden, und
das Linkparameter-Bestimmungssystem (24) ausgestaltet ist, die bestimmten Linkparameter zusammen mit der Position der schmalbündelnden Antenne (11, 12) entsprechend dem jeweiligen Kommunikationspfad zu speichern.

7. Kommunikationssystem (3) gemäß einem der Ansprüche 1 bis 6, wobei der wenigstens eine Linkparameter einen AGC-Wert aufweist.

8. Kommunikationssystem (3) gemäß einem der Ansprüche 1 bis 7, wobei der wenigstens eine Linkparameter die Länge eines Schutzintervalls aufweist.

9. Kommunikationssystem (3) gemäß einem der Ansprüche 1 bis 8, wobei der wenigstens eine Linkparameter einen Indikator eines Frequenzbereichs aufweist.

10. Kommunikationssystem (3) gemäß einem der Ansprüche 1 bis 9, wobei der wenigstens eine Linkparameter einen Indikator eines Kodierschemas aufweist.

11. Kommunikationssystem (3) gemäß einem der Ansprüche 1 bis 10, wobei der wenigstens eine Linkparameter einen Indikator eines Modulationsschemas aufweist.

12. Kommunikationssystem (3) gemäß einem der Ansprüche 1 bis 11, wobei der wenigstens eine Linkparameter eine Information aufweist, die anzeigt, ob Frequenzbereichsentzerrung eingesetzt werden soll oder nicht.

13. Kommunikationssystem gemäß einem der Ansprüche 1 bis 12, wobei der wenigstens eine Linkparameter eine Information aufweist, die anzeigt, ob ein Einzel- oder ein Mehrträgersystem eingesetzt werden soll.

14. Kommunikationseinrichtung (2), die dazu ausgestaltet ist, ein Signal über eine Anzahl an Kommunikationspfaden von einer weiteren Kommunikationseinrichtung (1) zu empfangen, mit
einem Linkparameter-Bestimmungssystem (24) zum Bestimmen wenigstens eines Linkparameters zum Betreiben eines Kommunikationslinks für jeden der Anzahl an Kommunikationspfaden basierend auf einem über den entsprechenden Kommunikationspfad empfangenen Signal und zum Speichern der bestimmten Linkparameter,
wobei die Kommunikationseinrichtung (2), wenn sie auf einen Kommunikationspfad umschaltet, um einen Kommunikationslink mit der weiteren Kommunikationseinrichtung (1) zu betreiben, dazu ausgestaltet ist, einen Kommunikationslink mit der weiteren Kommunikationseinrichtung (1) auf dem Kommunikationspfad basierend auf wenigstens einem gespeicherten Linkparameter des Kommunikationspfades zu betreiben.

15. Kommunikationseinrichtung (2) gemäß Anspruch 14, wobei das Linkparameter-Bestimmungssystem (24) ferner ausgestaltet ist, die gespeicherten Linkparameter basierend auf einem auf dem entsprechenden Kommunikationspfad übertragenen Signal zu aktualisieren.

16. Kommunikationseinrichtung (2) gemäß Anspruch 14 oder 15, wobei
die Kommunikation zwischen der Kommunikationseinrichtung (2) und der weiteren Kommunikationseinrichtung (1) auf Zeitrahmen basiert, wobei jeder Zeitrahmen eine erste Zeitdauer (13) und eine zweite Zeitdauer (17) umfasst, wobei
das Linkparameter-Bestimmungssystem (24) ferner ausgestaltet ist, den wenigstens einen Linkparameter für wenigstens einen der Anzahl an Kommunikationspfaden während der ersten Zeitdauer (13) eines Rahmens zu bestimmen, und wobei
die Kommunikationseinrichtung (2) ausgestaltet ist, den Kommunikationslink während der zweiten Zeitdauer (17) eines Rahmens zu betreiben.

17. Kommunikationseinrichtung (2) gemäß Anspruch 14, 15 oder 16 mit
einem Kommunikationspfadauswahlsystem (22), das dazu ausgestaltet ist, den Kommunikationspfad, auf dem der Kommunikationslink betrieben wird, basierend auf einem oder mehreren der über die Anzahl an Kommunikationspfaden übertragenen Signale auszuwählen.

18. Kommunikationseinrichtung (2) gemäß einem der Ansprüche 14 bis 17, mit
einer schmalbündelnden Antenne (12), die dazu ausgestaltet ist, an verschiedene Positionen entsprechend verschiedenen Kommunikationspfaden gesteuert zu werden, und wobei
das Linkparameter-Bestimmungssystem (24) ausgestaltet ist, die bestimmten Linkparameter zusammen mit der Position der schmalbündelnden Antenne (12) entsprechend dem jeweiligen Kommunikationspfad zu speichern.

19. Kommunikationsverfahren zwischen einer ersten Kommunikationseinrichtung (1) und einer zweiten Kommunikationseinrichtung (2) basierend auf einer Anzahl an Kommunikationspfaden mit den Schritten
Übertragen (S10, S12, S9) eines Signals auf einer Anzahl an Kommunikationspfaden,
Bestimmen und Speichern (S14B) wenigstens eines Linkparameters zum Betreiben eines Kommunikationslinks für jeden der Anzahl an Kommunikationspfaden basierend auf einem auf dem jeweiligen Kommunikationspfad übertragenen Signal und,
wenn auf einen Kommunikationspfad zum Betreiben eines Kommunikationslinks umgeschaltet wird, Betreiben (S6) eines Kommunikationslinks auf dem Kommunikationspfad unter Benutzung wenigstens eines gespeicherten Linkparameters des Kommunikationspfades.

20. Verfahren gemäß Anspruch 19, wobei
die gespeicherten Linkparameter basierend auf einem auf dem jeweiligen Kommunikationspfad übertragenen Signal aktualisiert werden.

21. Verfahren gemäß Anspruch 19 oder 20, wobei
die Kommunikation zwischen der ersten Kommunikationseinrichtung (1) und der zweiten Kommunikationseinrichtung (2) auf Zeitrahmen basiert, wobei jeder Zeitrahmen eine erste Zeitdauer (13) und eine zweite Zeitdauer (17) aufweist, wobei
der wenigstens eine Linkparameter wenigstens eines der Anzahl an Kommunikationspfaden während der ersten Zeitdauer (13) eines Rahmens bestimmt wird und wobei
der Kommunikationslink während der zweiten Zeitdauer (17) eines Rahmens betrieben wird.

22. Verfahren gemäß Anspruch 19, 20 oder 21 mit dem Schritt
Auswählen (S4) des Kommunikationspfades, auf dem der Kommunikationslink betrieben wird, basierend auf einem oder mehreren der auf der Anzahl an Kommunikationspfaden übertragenen Signale.

23. Verfahren gemäß einem der Ansprüche 19 bis 22, wobei die erste Kommunikationseinrichtung (1) und/oder die zweite Kommunikationseinrichtung (2) eine schmalbündelnde Antenne (11, 12) aufweist, die dazu ausgestaltet ist, an verschiedene Positionen entsprechend verschiedenen Kommunikationspfaden gesteuert zu werden, und wobei
die bestimmten Linkparameter zusammen mit der Position der schmalbündelnden Antenne (11, 12) entsprechend dem jeweiligen Kommunikationspfad gespeichert werden.

## Revendications

1. Système de communication (3) comportant
un premier dispositif de communication (1) et un second dispositif de communication (2), lesdits premier et second dispositifs de communication (1, 2) étant adaptés pour transmettre un signal sur un certain nombre de trajets de communication entre lesdits premier et second dispositifs de communication (1, 2) et
un système de détermination de paramètres de liaison (24) pour déterminer au moins un paramètre de liaison pour activer une liaison de communication pour chacun dudit nombre de trajets de communication en fonction d'un signal transmis sur le trajet de communication respectif et pour mémoriser les paramètres de liaison déterminés, dans lequel
ledit premier dispositif de communication (1) et ledit second dispositif de communication (2), lors d'une commutation à un trajet de communication afin d'activer une liaison de communication, sont adaptés pour activer une liaison de communication sur ledit trajet de communication en utilisant au moins un paramètre de liaison mémorisé dudit trajet de communication.

2. Système de communication (3) selon la revendication 1, dans lequel ledit système de détermination de paramètres de liaison (24) est en outre adapté pour mettre à jour lesdits paramètres de liaison mémorisés en fonction d'un signal transmis sur le trajet de communication respectif.

3. Système de communication (3) selon la revendication 1 ou 2, dans lequel
la communication entre ledit premier (1) et ledit second (2) dispositif de communication est basée sur des trames temporelles, chaque trame temporelle comportant une première période (13) et une seconde période (17), dans lequel
ledit système de détermination de paramètres de liaison (24) est en outre adapté pour déterminer ledit au moins un paramètre de liaison pour au moins l'un dudit nombre de trajets de communication pendant la première période (13) sur une trame et dans lequel
ledit premier dispositif de communication (1) et ledit second dispositif de communication (2) sont adaptés pour activer ladite liaison de communication pendant la seconde période (17) d'une trame.

4. Système de communication (3) selon la revendication 1, 2 ou 3, comportant
un système de sélection de trajet de communication (22) adapté pour sélectionner ledit trajet de communication sur lequel ladite liaison de communication est activée en fonction d'un ou de plusieurs desdits signaux transmis sur ledit nombre de trajets de communication.

5. Système de communication (3) selon l'une quelconque des revendications 1 à 4, dans lequel
ledit système de détermination de paramètres de liaison (24) est compris dans ledit premier dispositif de communication (1) et/ou ledit second dispositif de communication (2).

6. Système de communication (3) selon l'une quelconque des revendications 1 à 5, dans lequel
ledit premier dispositif de communication (1) et/ou ledit second dispositif de communication (2) comporte une antenne à couverture limitée (11, 12) qui est adaptée pour être orientée dans différentes positions correspondant à différents trajets de communication et
ledit système de détermination de paramètres de liaison (24) est adapté pour mémoriser lesdits paramètres de liaison déterminés conjointement avec la position de l'antenne à couverture limitée (11, 12) correspondant au trajet de communication respectif.

7. Système de communication (3) selon l'une quelconque des revendications 1 à 6, dans lequel ledit au moins un paramètre de liaison comporte une valeur CAG.

8. Système de communication (3) selon l'une quelconque des revendications 1 à 7, dans lequel ledit au moins un paramètre de liaison comporte la longueur d'un intervalle de garde.

9. Système de communication (3) selon l'une quelconque des revendications 1 à 8, dans lequel ledit au moins un paramètre de liaison comporte un indicateur d'une plage de fréquences.

10. Système de communication (3) selon l'une quelconque des revendications 1 à 9, dans lequel ledit au moins un paramètre de liaison comporte un indicateur de schéma de codage.

11. Système de communication (3) selon l'une quelconque des revendications 1 à 10, dans lequel ledit au moins un paramètre de liaison comporte un indicateur d'un schéma de modulation.

12. Système de communication (3) selon l'une quelconque des revendications 1 à 11, dans lequel ledit au moins un paramètre de liaison comporte une information indiquant si une égalisation de domaine de fréquence doit être utilisée ou non.

13. Système de communication selon l'une quelconque des revendications 1 à 12, dans lequel ledit au moins un paramètre de liaison comporte une information indiquant si un système à porteuse unique ou à porteuses multiples doit être utilisé.

14. Dispositif de communication (2) adapté pour recevoir un signal par l'intermédiaire d'un certain nombre de trajets de communication depuis un autre dispositif de communication (1) comportant
un système de détermination de paramètres de liaison (24) pour déterminer au moins un paramètre de liaison pour activer une liaison de communication pour chacun dudit nombre de trajets de communication en fonction d'un signal reçu par l'intermédiaire du trajet de communication respectif, et pour mémoriser les paramètres de liaison déterminés,
ledit dispositif de communication (2), lors d'une commutation à un trajet de communication afin d'activer une liaison de communication avec un autre dispositif de communication (1), est adapté pour activer une liaison de communication avec l'autre dispositif de communication (1) sur ledit trajet de communication en utilisant au moins un paramètre de liaison mémorisé dudit trajet de communication.

15. Dispositif de communication (2) selon la revendication 14, dans lequel ledit système de détermination de paramètres de liaison (24) est en outre adapté pour mettre à jour lesdits paramètres de liaison mémorisés en fonction d'un signal transmis sur le trajet de communication respectif.

16. Dispositif de communication (2) selon la revendication 14 ou 15, dans lequel
la communication entre ledit dispositif de communication (2) et ledit autre dispositif de communication (1) est basée sur des trames temporelles, chaque trame temporelle comportant une première période (13) et une seconde période (17), dans lequel
ledit système de détermination de paramètres de liaison (24) est en outre adapté pour déterminer ledit au moins un paramètre de liaison pour au moins l'un dudit nombre de trajets de communication pendant la première période (13) d'une trame dans lequel
ledit dispositif de communication (2) est adapté pour activer ladite liaison de communication pendant la seconde période (17) d'une trame.

17. Dispositif de communication (2) selon la revendication 14, 15 ou 16 comportant
un système de sélection de trajet de communication (22) adapté pour sélectionner ledit trajet de communication sur lequel ladite liaison de communication est activée en fonction d'un ou de plusieurs desdits signaux transmis sur ledit nombre de trajets de communication.

18. Dispositif de communication (2) selon l'une quelconque des revendications 14 à 17, comportant
une antenne à couverture limitée (12)) qui est adaptée pour être orientée dans différentes positions correspondant à différents trajets de communication et dans lequel
ledit système de détermination de paramètres de liaison (24) est adapté pour mémoriser lesdits paramètres de liaison déterminés conjointement avec la position de l'antenne à couverture limitée (12) correspondant au trajet de communication respectif.

19. Procédé de communication entre un premier dispositif de communication (1) et un second dispositif de communication (2) en fonction d'une pluralité de trajets de communication comportant les étapes consistant à :
transmettre (S10, S12, S9) un signal sur un certain nombre de trajets de communication,
déterminer et mémoriser (S14B) au moins un paramètre de liaison pour activer une liaison de communication pour chacun d'un dudit nombre de trajets de communication en fonction d'un signal transmis sur le trajet de communication respectif et
lors d'une commutation à un trajet de communication afin d'activer une liaison de communication, activer (S6) une liaison de communication sur ledit trajet de communication en utilisant au moins un paramètre de liaison mémorisé dudit trajet de communication.

20. Procédé selon la revendication 19, dans lequel
lesdits paramètres de liaison mémorisés sont mis à jour en fonction d'un signal transmis sur le trajet de communication respectif.

21. Procédé selon la revendication 19 ou 20, dans lequel
la communication entre ledit premier dispositif de communication (1) et ledit second dispositif de communication (2) est basée sur des trames temporelles, chaque trame temporelle comportant une première période (13) et une seconde période (17), dans lequel
ledit au moins un paramètre de liaison d'au moins l'un dudit nombre de trajets de communication est déterminé pendant la première période (13) d'une trame et dans lequel
ladite liaison de communication est activée pendant la seconde période (17) d'une trame.

22. Procédé selon la revendication 19, 20 ou 21, comportant une étape consistant à
sélectionner (S4) ledit trajet de communication sur lequel ladite liaison de communication est activée en fonction d'un ou de plusieurs desdits signaux transmis sur ledit nombre de trajets de communication.

23. Procédé selon l'une quelconque des revendications 19 à 22, dans lequel ledit premier dispositif de communication (1) et/ou ledit second dispositif de communication (2) comporte une antenne à couverture limitée (11, 12) qui est adaptée pour être orientée dans différentes positions correspondant à différents trajets de communication et dans lequel
lesdits paramètres de liaison déterminés sont mémorisés conjointement avec la position de l'antenne à couverture limitée (11, 12) correspondant au trajet de communication respective.
